(19) Europäisches Patentamt
European Patent Office
Office européen des brevets

(11) Publication number: 0 007 647
B1

(12) # EUROPEAN PATENT SPECIFICATION

(45) Date of publication of patent specification: 13.12.89

(51) Int. Cl.[4]: C 08 F 210/16, C 08 F 4/64

(21) Application number: 79102780.8

(22) Date of filing: 02.08.79

(54) **Ethylene polymers and process for preparing same.**

(30) Priority: 02.08.78 IT 2639878

(43) Date of publication of application: 06.02.80 Bulletin 80/03

(45) Publication of the grant of the patent: 13.12.89 Bulletin 89/50

(84) Designated Contracting States: AT BE DE FR GB IT NL SE

(56) References cited:
GB-A-1 150 814
GB-A-1 355 245

(73) Proprietor: Montedison S.p.A.
Patents & Licensing Dept. Foro Buonaparte, 31
P.O. Box 10528
I-20121 Milan (IT)

(72) Inventor: Albizzati, Enrico
45, Via F. Baracca
Arona (Novara) (IT)
Inventor: Zucchini, Umberto, Dr.
11, Via G. Leopardi
Ferrara (IT)
Inventor: Soverini, Arrigo
18, Viale Ferrucci
Novara (IT)
Inventor: Cuffiani, Illaro
33, Via Bagaro
Ferrara (IT)

(74) Representative: Zumstein, Fritz sen., Dr. et al
Dr. F. Zumstein sen. Dr. E. Assmann Dr. R. Koenigsberger Dipl.-Ing. F. Klingseisen Dr. F. Zumstein jun. Bräuhausstrasse 4
D-8000 München 2 (DE)

**The file contains technical information submitted after the application was filed and not included in this specification**

EP 0 007 647 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Low and mean density polyethylenes (values generally lower than 0.945) obtained by low pressure polymerization processes, in which ethylene is polymerized in admixture with an alpha-olefin, in particular propylene or butene, in the presence of Ziegler-type catalysts or of catalysts based on silica-supported Cr oxides, are already known.

The amount of polymerized alpha-olefin contained in the polymers generally ranges from 1 to 15% by moles.

The ratio between the molar percentage of alpha-olefin and the polymer density does not go down generally, to values low or than 5—6 for density values equal to about 0.910.

A high content of alpha-olefin in the polyethylene chain one side contributes to cause a lowering in the polymer density and, on the other side, adversely effects all the mechanical properties of said polymer.

Thus it is desiderable to obtain polymers which, for a given density, have a minimum content of alpha-olefins.

Copolymers endowed with said characteristics (low density and simultaneously low content of alpha-olefin) were already obtained, as described in CA—B—849,081. These copolymers, however, are characterized by a relatively low melting point, comprised between about 122° and 102°C for density values decreasing from about 0.930 to 0.912 g/cm$^3$. In the field of the copolymers which, for a given density, have a low content of alpha-olefin, it is desiderable, with a view to getting good mechanical properties, that the polymer melting point be as high as possible.

Further, GB—A—1355245 discloses crystalline copolymers of ethylene and 0.5—20 mole% of an alpha-olefin having a density of 0.900 to 0.945 g/cm$^3$ and a melting point expressed by the formula: $400\,d-254 \leqq T \leqq 127$. Such copolymers are prepared by polymerizing the monomers in a hydrocarbon solvent in the presence of Ziegler-type catalysts, at the melting temperature of the resulting copolymers.

Also in this case, when ethylene-butene-1 copolymers of a density lower than about 0.93 are prepared, same turn out to contain a high amount of butene-1 monomer, such that ratios of molar percent of butene-1 content to density higher than 3 are observed. Further, the melting point of said copolymers are exceedingly low.

According to the present invention crystalline copolymers of ethylene with butene-1 have been made available having a butene-1 content ranging from 0.7 to 2.3% by moles, in which the ratio between the molar percentage of polymerized butene-1 and the polymer density is comprised between 0.75 and 2.45 for density values decreasing from 0.931 to 0.910 g/cm$^3$, and in which the melting point of the copolymers is comprised between 121.5°C and 127°C and increases as the density increases, obtainable by copolymerisation of mixtures of ethylene and butene-1 in the gas phase in the presence of a catalyst obtained by reacting:

A) an Al-alkyl compound with

B) the solid product of the reaction among:

a) a Ti-alcoholate comprising at least a Ti-OR bond, in which R is an alkyl, aryl or cycloalkyl radical having 1 to 18 C;

b) a compound $X_n\,Mg(OR)_{2-n}$, in which X is a halogen, R has the meaning specified hereinabove, and $0 \leq n \leq 2$;

c) an Al-halide of formula $X_pAlR_{3-p}$, in which X and R have the meaning already indicated and $1 \leq p \leq 3$.

For a given density and a given content of butene-1 copolymers of the present invention are therefore characterized, in respect of the polymers known so far, by a higher melting point. That involves better mechanical properties and in particular better tenacity.

Another characterizing feature which differentiates these copolymers from the ones known so far consists in that the number of methyl for 100 C is almost equal to the number of radicals deriving from butene-1.

For a given content of butene-1 the density of the copolymers varies according to the melt index of the copolymer (determined according to standard ASTM 1238 cond. E).

However the corrections in respect of the density of the copolymer having a melt index equal to 1 are relatively small, as they refer only to the third decimal figure. The melt index is respectively decreased or increased depending if it is higher or lower than 1.

For a copolymer containing 2% by moles of butene, the density is 0.922 when the melt index is 0.03, and it is 0.933 when the melt index is 50, while the density is 0.9265 when the melt index is 1.

The relative low values of the ratio between polymerized butene-1 and density and, at the same time, the high melting point bring about particularly high mechanical properties in the films.

In particular, the films exhibit a high impact strength and contemporaneously a high tensile strength.

The polymers are prepared by polymerizing in the gas phase mixtures of ethylene and of butene-1 and catalysts prepared from Ti compounds supported on Mg halides and from metallorganic Al compounds as specified above, which are active in the polymerization of ethylene, but little or not at all active in the homopolymerization of the alpha-olefins.

The catalysts consist, in particular, of the reaction product of:

A) an Al-alkyl compound, in particular an Al-trialkyl such as $Al(C_2H_5)_3$, $Al(i\text{-}C_4H_9)_3$ or a dihalide of Al-alkyl, with

B) the solid product of the reaction between:

a) a tetravalent Ti-alcoholate comprising at least a Ti-OR bond in which R is an alkyl, aryl or cycloalkyl radical with 1 to 18 C, and a complex between:

b) a compound $X_nMg(OR)_{2-n}$ in which X is a halogen, R has the meaning specified hereinbefore, $0 \leq n \leq 2$, and

c) an Al halide of formula:

$$X_2AlR$$

in which X and R have the meanings indicated hereinabove.

In particular, component B) is the product of the reaction of an adduct between a Mg dihalide and a dihalide of Al-alkyl with a Ti compound of the type indicated hereinabove.

The preferred Ti compounds are the Ti tetraalcoholates. Examples of representative compounds are $Ti(O\text{-}n\text{-}C_4H_9)_4$ and $Ti(O\text{-}n\text{-}C_3H_7)_4$.

Some examples of other useful Ti compounds are:

$$Ti(O\text{-}n\text{-}C_3H_7)_2Cl_2,\ Ti(O\text{-}n\text{-}C_4H_9)_2Cl_2,\ Ti(O\text{-}n\text{-}C_4H_9)_3Cl.$$

Mg dihalides, for example $MgCl_2$, or a Mg dialcoholate are employed in particular as compound b).

If a Mg dihalide is utilized, the compound is dissolved in a dihalide of Al-alkyl in amounts equal to 4—6 moles in respect to the Mg halide, operating at temperatures high enough to cause the dissolution (80°—100°C).

The solution is then reacted with the Ti alcoholate: in this case a catalyst component B) is obtained, the particles of which have sizes ranging from about 10 to 30 μm, and which gives place to a polymer in the form of particles having sizes ranging from about 100 to 500 μm.

Catalysts of this type, which permit to control the polymer granulometry, are preferably utilized.

It is also possible to employ, with analogous results, the catalysts described in DE—A—28 22 809.

The preferred polymerization technique is the one of the fluid bed. It is operated at pressures lower than 50 bar (50 atm.) and at temperatures lower than the softening point of the polymer and generally ranging from 50° to 110°C. Ethylene is fed in such ratio to butene-1, as to obtain a polymer having the desired density. The polymerized butene-1 corresponds to about 1/10 of the amount contained in the feeding mixture.

The molecular weight regulation is effected according to known methods, for example with hydrogen.

The following examples are given to illustrate the present invention, without being however a limitation thereof.

The melting point is determined according to the method described in CA—B—849,081.

Example 1

a) Preparation of the catalyst

95 g of anhydrous $MgCl_2$ were dissolved at 120°C in 4.5 moles of $Al(C_2H_5)Cl_2$, and the solution was poured into a solution of Ti-tetrabutylate dissolved in hexane.

The Ti/Mg ratio was equal to 3.

The solid product so obtained was filtered and repeatedly washed with hexane.

The dried solid, subjected to analysis, gave the following results:

Ti=17% by weight

Mg=2.5% by weight.

b) Polymerization

It was operated in the gas phase in a steel cylindrical reactor, having a volume of about 8l and a truncated cone-shaped bottom, inserted in a circuit, in which the gas was recirculated by means of a diaphragm compressor. The reactor was of the spouted bed type and the gas feeding it was in such amount, as to obtain, on the bottom of the inlet duct, a speed on about 2 m/sec. The make-up gases ($C_2H_2$, butene-1, $N_2$) were fed after treatment on molecular sieves.

The catalytic system, prepared every 8 hours, was dispersed in n-heptane at a concentration of 0.6 g of solid/h, maintaining an Al/Ti molar ratio equal to 100. The system was prepared by mixing the catalyst component as prepared under a) with Al-triisobutyl dissolved in heptane. The suspension was fed to the reactor batchwise, every 10 minutes, using a vessel with a few ml-capacity, in which the suspension was dosed and wherefrom it was then sent into the polymer bed by means of a pure nitrogen pressure.

The catalyst feed (about 2 mg/h of Ti) and the gas capacity (entering at an average temperature of 70°C) to the reactor were adjusted in order to keep the polymerization temperature around 95°C. Under these conditions it was possible to obtain an average production of about 150 g of polymer/h with an average residence time of the catalyst of 3.5 h.

The concentrations of the individual components in the circulating gas were as follows:

| | |
|---|---|
| Butene-1 | 10% by vol. |
| Hydrogen | 1% by vol. |
| Ethylene | 88—85% by vol. |
| Nitrogen | 2—5% by vol. |

Under these conditions and operating at a pressure of 20 bar (20 atm.) it was possible to obtain polymerization yields of about 70 kg of polymer/g of Ti and a product having the following characteristics:

| | |
|---|---|
| Density | 0.931 g/ml |
| $C_4$ content | 1.4% by weight |
| $CH_3$/100C number | 0.35 |
| $C_2H_5$/100C number | 0.35 |
| Melt index | 0.12 g/10 min. |
| Melting point | 127°C |
| Bulk density | 0.49 g/ml. |

Example 2

It was operated with the apparatus and according to the modalities described in example 1, varying, in the gas composition, only the concentration by volume of butene-1, which in this case was kept at 18%.

A polymerization yield like the one indicated in example 1 (70 kg of polymer/g of Ti) and a product having the following characteristics were obtained:

| | |
|---|---|
| Density | 0.9268 g/ml |
| $C_4$ content | 2.7% by weight |
| $CH_3$/100C number | 0.7 |
| $C_2H_5$/100C number | 0.7 |
| Melt index | 0.16 g/10 min. |
| Melting point | 125°C |
| Bulk density | 0.49 g/ml |

Example 3

It was operated with the same apparatus and modalities as described in example 1, varying, in the gas composition, the concentration by volume of butene-1, which was now maintained at 14%, of hydrogen, which was now of 9%, and of nitrogen, which was now of 5—10%.

A polymerization yield like the one indicated in example 1 (70 kg of polymer/g of Ti) and a product with the following characteristics were obtained:

| | |
|---|---|
| Density | 0.921 g/ml |
| $C_4$ content | 4.52% by weight |
| $CH_3$/100C number | 1.15 |
| $C_2H_5$/100C number | 1.15 |
| Melt index | 0.5 g/10 min. |
| Melting point | 121.5°C |
| Bulk density | 0.49 g/ml |

A film obtained by blow-molding having a thickness of 140—158 mm, exhibited the following characteristics:

resistance to double folding at 23°C σ=500 g (ASTM D 2176)>50,000
bursting strength at 23°C (ASTM D 74)>2.9 kg/cm²
tensile strength at 23°C ds/dt=1 cm/min. (ASTM D 1238 cond. E)

| | |
|---|---|
| σy (parallel-transversal) (kg/cm²) | 124—136 |
| σB (parallel-transversal) (kg/cm²) | 306—334 |
| εy (parallel-transversal) (%) | 13.4—12.6 |
| εB (parallel-transversal) (%) | 1060—1100. |

**Claims**

1. Crystalline copolymers of ethylene with butene-1 having a butene-1 content ranging from 0.7 to 2.3% by moles, in which the ratio between the molar percentage of polymerized butene-1 and the polymer density is comprised between 0.75 and 2.45 for density values decreasing from 0.931 to 0.910 g/cm³, and in which the melting point of the copolymers is comprised between 121.5° and 127°C and increases as the density increases, obtainable by copolymerisation of mixtures of ethylene and butene-1 in the gas phase in the presence of a catalyst obtained by reacting:

A) an Al-alkyl compound with

B) the solid product of the reaction among:

a) a Ti-alcoholate comprising at least a Ti-OR bond, in which R is an alkyl, aryl or cycloalkyl radical having 1 to 18 C;

b) a compound $X_nMg(OR)_{2-n}$, in which X is a halogen, R has the meaning specified hereinabove, and $0 \leq n \leq 2$;

c) an Al-halide of formula $X_pAlR_{3-p}$, in which X and R have the meaning already indicated and $1 \leq p \leq 3$.

2. Crystalline copolymers according to Claim 1 of ethylene with butene-1 having

A: a density of 0.931 g/cm$^3$; a ratio R between the molar percentage of butene-1 and the polymer density of 0.75; and a melting point of 127°C;

B: a density of 0.9268 g/cm$^3$; a ratio R of 1.46; and a melting point of 125°C;

C: a density of 0.921 g/cm$^3$; a ratio R of 2.45; and a melting point of 121.5°C.

3. A process for preparing the copolymers according to Claim 1 or 2, characterized in that mixtures of ethylene and butene-1 are polymerized in the gas phase in the presence of a catalyst obtained by reacting:

A) an Al-alkyl compound with

B) the solid product of the reaction among;

a) a Ti-alcoholate comprising at least a Ti-OR bond, in which R is an alkyl, aryl or cycloalkyl radical having 1 to 18 C;

b) a compound $X_nMg(OR)_{2-n}$, in which X is a halogen, R has the meaning specified hereinabove, and $0 \leq n \leq 2$;

c) an Al-halide of formula $X_pAlR_{3-p}$, in which X and R have the meaning already indicated and $1 \leq p \leq 3$.

4. Use of the crystalline copolymers according to Claim 1 or 2 for the preparation of films.

**Patentansprüche**

1. Kristalline Copolymere von Äthylen mit Buten-1 mit einem Buten-1-Gehalt von 0,7 bis 2,3 Mol%, worin das Verhältnis zwischen den Molprozenten an polymerisiertem Buten-1 und der Polymerdichte zwischen 0,75 und 2,45 für von 0,931 auf 0,910 g/cm$^3$ fallende Dichtewerte liegt und worin der Schmelzpunkt der Copolymere 121,5 bis 127°C beträgt und steigt, wenn die Dichte zunimmt, erhältlich durch Copolymerisation von Mischungen von Äthylen und Buten-1 in der Gasphase in Anwesenheit eines Katalysators, der durch Umsetzen

A) einer Al-Alkylverbindung mit

B) dem festen Produkt der Reaktion zwischen

a) einem Ti-Alkoholat umfassend mindestens eine Ti-OR-Bindung, worin R ein Alkyl-, Aryl- oder Cycloalkylrest mit 1 bis 18 C-Atomen ist,

b) einer Verbindung $X_nMg(OR)_{2-n}$, worin X ein Halogen ist, R die oben angegebene Bedeutung hat und $0 \leq n \leq 2$, und

c) einem Al-Halogenid der Formel $X_pAlR_{3-p}$, worin X und R die bereits angegebene Bedeutung haben und $1 \leq p \leq 3$, erhalten wurde.

2. Kristalline Copolymere nach Anspruch 1 von Äthylen mit Buten-1 mit

A: einer Dichte von 0,931 g/cm$^3$, einem Verhältnis R zwischen den Molprozenten Buten-1 und der Polymerdichte von 0,75 und einem Schmelzpunkt von 127°C;

B: einer Dichte von 0,9268 g/cm$^3$, einem Verhältnis R von 1,46 und einem Schmelzpunkt von 125°C,

C: einer Dichte von 0,921 g/cm$^3$, einem Verhältnis R von 2,45 und einem Schmelzpunkt von 121,5°C.

3. Verfahren zum Herstellen der Copolymere nach Anspruch 1 oder 2, dadurch gekennzeichnet, daß Mischungen von Äthylen und Buten-1 in der Gasphase in Anwesenheit eines Katalysators polymerisiert werden, der durch Umsetzen

A) einer Al-Alkylverbindung mit

B) dem festen Produkt der Reaktion zwischen

a) einem Ti-Alkoholat umfassend mindestens eine Ti-OR-Bindung, worin R ein Alkyl-, Aryl- oder Cycloalkylrest mit 1 bis 18 C-Atomen ist,

b) einer Verbindung $X_nMg(OR)_{2-n}$, worin X ein Halogen ist, R die oben angegebene Bedeutung hat und $0 \leq n \leq 2$, und

c) einem Al-Halogenid der Formel $X_pAlR_{3-p}$, worin X und R die bereits angegebene Bedeutung haben und $1 \leq p \leq 3$, erhalten wurde.

4. Verwendung der kristallinen Copolymere nach Anspruch 1 oder 2 zur Herstellung von Folien.

**Revendications**

1. Copolymère cristallins d'éthylène et de butène-1 ayant une teneur en butène-1 comprise entre 0,7 et 2,3% en moles, dans lesquels le rapport entre le pourcentage molaire de butène-1 polymérisé/densité du polymère est compris entre 0,75 et 2,45 pour des densités diminuant de 0,931 à 0,910 g/cm$^3$ et dont le point de fusion est compris entre 121,5° et 127°C et augmente avec la densité, qui peuvent être obtenus par copolymérisation de mélanges d'éthylène et de butène-1, en phase gazeuse, en présence d'un catalyseur obtenu par la réaction:

A) d'un composé Al-alkyle, avec

B) le produit solide d ela réaction entre

a) un alcoolate de Ti comprenant au moins une liaison Ti-OR où R est un groupe alkyle, aryle ou cycloalkyle ayant 1 à 18 atomes de carbone;

b) un composé $X_n Mg(OR)_{2-n}$ où X est un atome d'halogène, R est tel que défini plus haut, et $0 \leq n \leq 2$;

c) un halogènure d'Al de formule $X_pAlR_{3-p}$, dans laquelle X et R sont tels que définis plus haut et $1 \leq p \leq 3$.

2. Co-polymères cristallins d'éthylène et de butène-1 suivant la revendication 1, caractérisé en ce qu'ils présentent:

A) une densité de 0,931 g/cm$^3$; un rapport R pourcentage molaire de butène-1/densité du polymère de 0,75; et un point de fusion de 127°C;

B) une densité de 0,9268 g/cm$^3$; un rapport R de 1,46 et un point de fusion de 125°C.

C) une densité de 0,921 g/cm$^3$; un rapport R de 2,45 et un point de fusion de 121,5°C.

3. Procédé de préparation des copolymères suivant la revendication 1 ou 2, caractérisé en ce que des mélanges d'éthylène et de butène-1 sont polymérisés, en phase gazeuse, en présence d'un catalyseur obtenu par la réaction:

A) d'un composé Al-alkyle avec

B) le produit solide de la réaction entre:

a) un alcoolate de Ti comprenant au moins une liaison Ti-OR, dans laquelle R est un groupe alkyle, aryle ou cycloalkyle ayant 1 à 18 atomes de carbones;

b) un composé $X_nMg(OR)_{2-n}$, dans lequel X est un atome d'halogène, R est tel que défini plus haut et $0 \leq n \leq 2$;

c) un halogénure d'Al de formule $X_pAlR_{3-p}$, dans laquelle X et R sont tels que définis plus haut et $1 \leq p \leq 3$.

4. Utilisation des copolymères cristallins suivant la revendication 1 ou 2 pour la préparation de films.